Europäisches Patentamt

European Patent Office

Office européen des brevets

(19)

(11) Numéro de publication : **0 457 636 A1**

(12) **DEMANDE DE BREVET EUROPEEN**

(21) Numéro de dépôt : **91401137.4**

(22) Date de dépôt : **29.04.91**

(51) Int. Cl.⁵ : **A01B 17/00, A01B 49/02**

(30) Priorité : **02.05.90 FR 9005551**

(43) Date de publication de la demande :
**21.11.91 Bulletin 91/47**

(84) Etats contractants désignés :
**BE CH DE LI LU**

(71) Demandeur : **GOURDIN-SOUPLEX**
**Saulnières**
**F-28500 Vernouillet (FR)**

(72) Inventeur : **Cromback, Thierry**
**61 Boulevard de la Saussaye**
**F-92200 Neuilly sur Seine (FR)**

(74) Mandataire : **Beauchamps, Georges et al**
**Cabinet Z.Weinstein 20, avenue de Friedland**
**F-75008 Paris (FR)**

(54) Dispositif d'attelage d'un appareil de traitement ou de travail des terres labourées à une charrue tractée réversible.

(57) La présente invention concerne un dispositif d'attelage d'un appareil de traitement ou de travail des terres labourées à une charrue tractée réversible.

Ce dispositif d'attelage (5) comprend essentiellement un bras (8) d'attelage d'une charrue tractée réversible (3) à un appareil (6) de travail des terres labourées, lequel appareil comprend un timon (10) monté coulissant sur le bras (8) entre deux butées réglables (11, 11a), de façon que lors du retournement de la charrue en vue de réaliser le labour d'une autre bande de terre, le timon (10) demeurant attelé au bras (8) puisse se déplacer le long de celui-ci pour se retourver en fin de rotation de la charrue (3) et donc du bras (8) dans l'axe (F) de ladite autre bande de terre à labourer.

Ce dispositif permet notamment de travailler la terre au moyen de disques, immédiatement après et dans l'axe d'une charrue labourant cette terre.

EP 0 457 636 A1

Fig. 1

La présente invention a essentiellement pour objet un dispositif d'attelage d'un appareil de traitement ou de travail des terres labourées, tel que par exemple un rouleau à disques, à une charrue tractée réversible.

On a déjà proposé, dans la demande de brevet européenne No. 87402830.1 déposée le 11 Décembre 1987 et appartenant à la demanderesse, un dispositif d'accrochage à une charrue tractée réversible d'un appareil de traitement ou de travail des terres labourées, qui est tractée par la charrue en étant maintenu dans l'axe de la bande de terre labourée par celle-ci.

Un tel dispositif permet aux appareils ou outils tractés par une charrue de traiter ou de travailler la terre immédiatement après l'opération de labour et dans l'axe de la bande de terre labourée, ce qui procure beaucoup d'avantages, comme expliqué dans la demande de brevet précitée.

En outre, un tel dispositif, en fin de bande labourée, assure automatiquement le décrochage de l'appareil de la charrue, puis, après recul du tracteur et retournement de sa charrue associée pour labourer une bande de terre adjacente, un nouvel accrochage de l'appareil à la charrue avant de travailler cette bande de terre adjacente est automatiquement réalisé.

Bien que le dispositif ci-dessus ait donné toute satisfaction, il serait néanmoins plus avantageux et plus rapide de réaliser le labour de bandes de terre adjacentes et le travail de ces bandes immédiatement après l'opération de labour et dans l'axe de la bande labourée, sans qu'il soit néssaire, en fin de labour d'une bande de terre, de procéder au décrochage de l'appareil trainé par la charrue, puis à une manoeuvre de la charrue et à un nouvel accrochage de l'appareil à la charrue avant labour.

La présente invention a pour but de résoudre ce problème en proposant un nouveau dispositif d'attelage maintenant en permanence l'appareil attelé à la charrue, et permettant à l'ensemble charrue-appareil d'effectuer un demi-tour en fin de bande labourée pour passer à la bande de terre suivante sans pour cela empêcher le retournement de la charrue lors de ce demi-tour, étant entendu que l'appareil tracté par la charrue se retrouvera toujours dans l'axe de la charrue et de la bande de terre à travailler.

A cet effet, l'invention a pour objet un dispositif d'attelage d'un appareil de traitement ou de travail des terres labourées à une charrue tractée réversible, et du type comprenant au moins un bras solidaire de la charrue et relié à un élément formant timon solidaire de l'appareil, caractérisé en ce que l'élément formant timon est monté mobile sur ledit bras, de façon que lors du retournement de la charrue en vue de réaliser le labour d'une autre bande de terre, l'élément formant timon demeurant attelé au bras, puisse se déplacer le long de celui-ci pour se retourver en fin de rotation de la charrue et donc du bras, dans l'axe de ladite autre bande de terre à labourer.

Selon un mode de réalisation préféré, l'élément formant timon solidaire de l'appareil est monté librement coulissant ou roulant sur le bras précité par l'intermédiaire de moyens tels que par exemple un manchon, des galets ou analogues.

On précisera encore que le bras précité, lorsque la charrue est en position de labour, s'étend transversalement à l'axe de labour suivant un angle par rapport à cet axe qui est inférieur à 90°.

Suivant un autre mode de réalisation, l'élément formant timon peut être déplacé, de manière positive, sur le bras précité par tout moyen approprié tel que par exemple une chaîne ou analogue sans fin reliée audit élément et montée autour de pignons solidaires du bras ou d'un autre élément de la charrue.

Dans ce cas, la chaîne ou analogue sans fin, ou plus précisément l'un des pignons, peut être entraîné par un moteur hydraulique.

Suivant une variante, la chaîne ou analogue sans fin est entraînée par une crémaillère coopérant avec l'un des pignons et solidaire de la tige d'un vérin double-effet lui-même solidaire du bras ou d'un autre élément de la charrue.

Suivant une autre caractéristique de l'invention, l'élément formant timon est raccordé à l'appareil tracté par la charrue, par l'intermédiaire d'une rotule ou analogue évitant toute contrainte sur cet élément lors du retournement de la charrue et donc du bras.

On précisera encore que, sur le bras précité, sont prévues deux butées réglables de limitation de course de l'élément formant timon sur le bras.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue schématique et en plan de dessus d'une charrue tractée et semi-portée à laquelle est attelé un appareil à l'aide du dispositif d'attelage selon cette invention, l'ensemble charrue-appareil étant illustré en position de travail.

La figure 2 est une vue en élévation et de côté de l'ensemble ci-dessus, alors que la charrue est en cours de retournement et se trouve à mi-chemin de sa course de retournement.

La figure 3 est une vue schématique et en plan de dessus illustrant, en fin de bande labourée et travaillée, comment s'effectue le demi-tour de l'ensemble charrue-appareil, pendant lequel s'effectue le retournement de la charrue.

La figure 4 est une vue schématique du bras et de l'élément formant timon associé à ce bras, et illustre des moyens d'actionnement du timon sur le bras.

La figure 5 est une vue similaire à la figure 4, mais montre en variante, d'autres moyens permettant le déplacement de l'élément formant timon sur le bras.

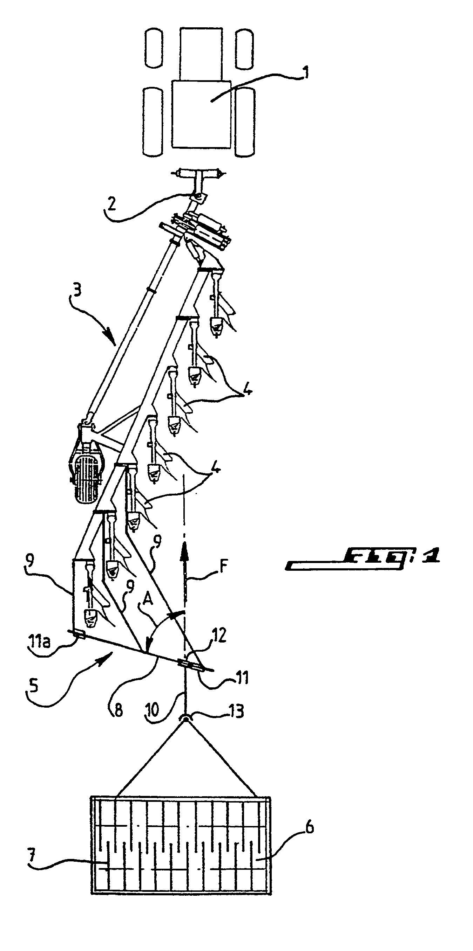

En se reportant aux figures 1 à 3, on voit un tracteur 1 auquel est attelé, par une articulation 2, une charrue 3 dont on voit les socs en 4, laquelle charrue est attelée par l'intermédiaire d'un dispositif 5 conforme à l'invention, à un appareil 6 de traitement ou de travail des terres labourées tel que par exemple un rouleau comportant une multiplicité de disques 7.

Le dispositif d'attelage 5 selon l'invention est ici appliqué, à une charrue 3, qui est une charrue semi-portée, c'est-à-dire remorquée par le tracteur 1, mais on pourrait parfaitement et sans sortir du cadre de l'invention, appliquer le dispositif 5 à une charrue portée, c'est-à-dire solidaire du tracteur 1.

Suivant la réalisation illustrée par les figures 1 à 3, le dispositif d'attelage 5 comprend essentiellement un bras 8 solidaire de la charrue 3 par l'intermédiaire de montants ou analogues illustrés schématiquement sur les figures et repérés en 9, tandis que l'appareil 6 comporte un élément formant timon 10 qui est monté librement mobile ou déplaçable sur le bras 8 entre deux butées réglables montrées schématiquement en 11 et 11a.

Plus précisément, le timon 10 de l'appareil 6 peut, suivant l'exemple de réalisation représenté sur les figures 1 à 3, comporter un manchon 12 monté librement coulissant sur le bras 8 solidaire de la charrue 3 par l'intermédiaire des montants 9.

A la place d'un manchon coulissant tel que 12, on pourrait parfaitement prévoir, sans sortir du cadre de l'invention, des galets ou analogues montés librement roulants sur le bras 8 qui constituerait alors un rail.

On a montré schématiquement en 13 une rotule, qui pourrait être un autre moyen analogue, interposée sur le timon 10 entre le manchon 12 et l'appareil 6 et permettant, comme on le décrira plus loin à propos du fonctionnement, d'éviter toute contrainte sur le timon 10 lors du retournement de la charrue 3 et donc du bras 8 solidaire de cette charrue.

Le bras 8, lorsque la charrue est en position de labour, comme on le voit bien sur la figure 1, s'étend transversalement à l'axe de labour matérialisé par la flèche F sur la figure 1, suivant un angle A par rapport à cet axe qui est inférieur à 90°. Ainsi, en position de travail, comme on le voit sur la figure 1, le timon 10 de l'appareil 6 se trouve automatiquement et nécessairement rappelé en position d'appui contre la butée 11 à l'une des extrémités du bras 8 et ce dans l'axe de labour F, qui est aussi l'axe d'avancement du tracteur 1 et de la charrue 3.

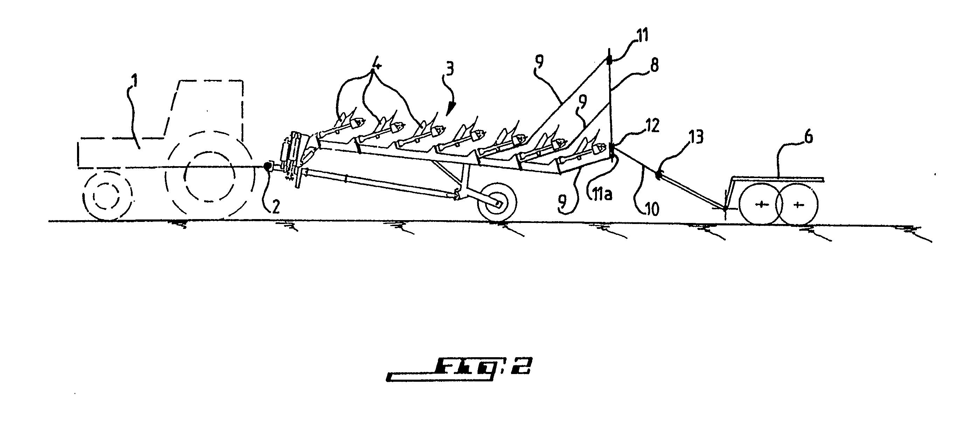

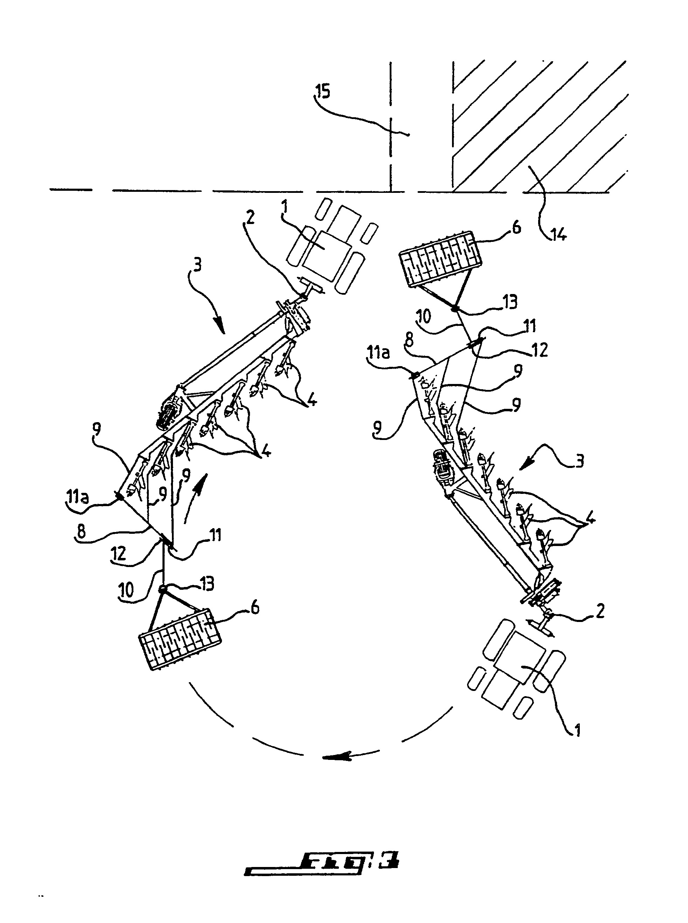

Mais pour une meilleure compréhension de l'invention, on expliquera ci-après comment s'effectue le passage du labour et du travail subséquent d'une bande terre à une autre bande de terre en s'aidant plus particulièrement des figures 2 et 3.

Sur la figure 3, on a montré en 14 une partie labourée et travaillée par l'appareil 6 immédiatement après et dans l'axe du labour effectué par la charrue 3, et on a montré en 15 une bande qui vient d'être labourée et travaillée respectivement par la charrue 3 et par l'appareil 6 tiré dans l'axe de ladite charrue.

En position de travail (figure 1), l'appareil 6 se positionne automatiquement sur la terre venant juste d'être labourée par la charrue 3, et cela dans l'axe de labour F grâce au manchon 12 coulissant sur le bras 8 sous l'effet de l'effort de traction, ledit manchon venant automatiquement en appui sur la butée 11 à l'une des extrémités du bras.

En fin de labour et de travail d'une bande de terre telle que 15, la charrue 3 est sortie de terre par retournement, comme on le voit sur la figure 2, de sorte que le manchon 12, sous l'effet de l'effort de traction, se déplacera jusqu'à la butée 11a à l'autre extrémité du bras 8, étant entendu que, lors de la rotation de la charrue, aucune contrainte ne sera imposée au timon 10 de l'appareil 6, en raison de la présence de la rotule 13.

Pendant ce temps, le tracteur 1 effectue un demi-tour, comme on le voit bien sur la figure 3, et le retournement de la charrue est poursuivi de façon qu'elle prenne la position visible sur la partie gauche de la figure 3.

Dans cette position, le manchon ou analogue 12 du timon 10 de l'appareil est revenu, par coulissement, en appui sur la butée 11.

Le tracteur 1 avance alors sur une bande de terre adjacente à la bande 15, et l'appareil 6 se trouvera automatiquement dans l'axe de labour F, comme montré sur la figure 1.

On comprend donc de ce qui précède que l'appareil 6 tracté par la charrue 3 et le tracteur 1 se centreront automatiquement sur la bande de terre labourée du fait du coulissement libre du timon 10 sur le bras 8, lequel coulissement permettra avantageusement le retournement de la charrue sans dételer l'appareil de cette charrue en fin de bande.

On observera encore que lors de la manoeuvre de l'ensemble charrue-appareil en fin de bande pour passer à une autre bande, aucun ripage sur le sol de l'appareil 6, ne se produira. En outre, le coulissement du timon 10 sur le bras 8 faisant avec l'axe de labour ou de traction F un angle A inférieur à 90°, permettra avantageusement de limiter les efforts sur l'ensemble de l'attelage.

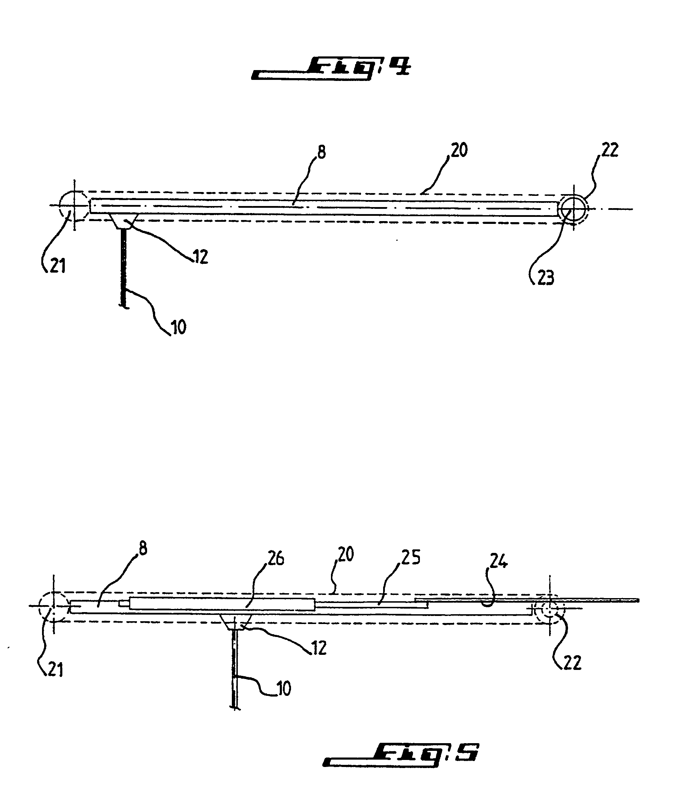

Au lieu d'utiliser un coulissement libre du timon 10 sur le bras 8, on pourrait parfaitement, sans sortir du cadre de l'invention, actionner de manière positive le timon 10 sur le bras, comme on le décrira maintenant en se reportant aux figures 4 et 5.

On voit sur ces deux figures une chaîne ou analogue sans fin 20 reliée au timon 10, ou plus précisément au manchon 12 monté coulissant sur le bras 8, cette chaîne 20 étant montée autour de deux pignons 21, 22 solidaires de la charrue et qui, suivant l'exemple de réalisation représenté, sont respectivement solidaires des deux extrémités du bras 8.

Comme on le voit sur la figure 4, l'un 22 des deux pignons est entraîné par un moteur hydraulique montré schématiquement en 23. On comprend donc que le moteur 23 pourra provoquer le déplacement du timon 10 sur le bras 8 dans un sens ou dans l'autre.

Suivant la variante illustrée par la figure 5, la chaîne sans fin 20 est entraînée par une crémaillère 24 coopérant avec l'un 22 des deux pignons 21, 22. Plus précisément, la crémaillère 24 est solidaire de la tige 25 d'un vérin double-effet 26 qui est lui-même solidaire d'un élément de la charrue 3, tel que par exemple le bras 8. Ainsi, une pression d'huile dans le vérin 26 commandera l'actionnement de la tige 25, c'est-à-dire de la crémaillère 24 qui, engrenant avec le pignon 22, entraînera en rotation la chaîne 20 dans un sens ou dans l'autre, de sorte que le timon 10, par le manchon 12, sera à son tour déplacé dans un sens ou dans l'autre sur le bras 8.

On observera que dans les réalisations des figures 4 et 5, bien que cela ne soit pas représenté, on pourra prévoir des butées réglables 11 et 11a sur le bras 8, comme décrit précédemment, de même qu'une rotule telle que 13 sera prévue entre le timon 10 et l'appareil 6.

Le fonctionnement des réalisations visibles sur les figures 4 et 5 sera exactement le même que celui décrit pour la réalisation illustrée par les figures 1 à 3, sauf que, lors du retournement de la charrue, le timon 10 sera actionné de manière positive.

Bien entendu l'invention n'est nullement limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif d'attelage d'un appareil (6) de traitement ou de travail des terres labourées à une charrue tractée réversible (3), et du type comprenant au moins un bras (8) solidaire de la charrue (3) et relié à un élément formant timon (10) qui est solidaire de l'appareil (6) et qui est monté mobile sur ledit bras ( 8 ), de façon que, lors du retournement de la charrue (3) en vue de réaliser le labour d'une autre bande de terre, l'élément formant timon (10) demeurant attelé au bras (8) puisse se déplacer le long de celui-ci, caractérisé en ce qu'en position de labour de la charrue (3), le bras s'étend transversalement à l'axe (F) de labour suivant un angle (A) par rapport à cet axe qui est inférieur à 90°, de façon qu'en fin de rotation de la charrue (3) et du bras (8), l'élément formant timon ( 10) se trouve automatiquement et nécessairement rappelé à l'une des extrémités du bras (8) et ce dans l'axe (F) de labour de l'autre bande de terre à labourer.

2. Dispositif selon la revendication 1, caractérisé en ce que l'élément formant timon (10) peut être actionné sur le bras (8) par une chaîne ou analogue sans fin (20) reliée audit élément (10) et montée autour de pignons (21, 22) solidaires du bras (8) ou d'un autre élément de la charrue (3), ladite chaîne étant entraînée par un moteur hydraulique (23) ou par une crémaillère (24) coopérant avec l'un (22) des pignons (21, 22) et solidaire de la tige (25) d'un vérin double-effet (26) lui-même solidaire du bras (8) ou d'un autre élément de la charrue (3).

FIG. 1

FIG. 2

Fig. 3

_Fig. 4_

_Fig. 5_

Office européen
des brevets

RAPPORT DE RECHERCHE EUROPEENNE

Numero de la demande

EP    91 40 1137

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 274 299 (J.-C. LECHOPIER) <br> * colonne 7, ligne 11 - colonne 9, ligne 35; figures 1-3 * | 1 | A01B17/00 <br> A01B49/02 |
| | --- | | |
| A | US-A-1 646 486 (G. LYTLE) <br> * le document en entier * | 1,2 | |
| | --- | | |
| A | US-A-2 796 816 (W.J. GRAY) <br> * le document en entier * | 1,2 | |
| | --- | | |
| A | US-A-3 476 191 (C.V.SCHLABS) <br> * le document en entier * | 1,2 | |
| | ----- | | |

DOMAINES TECHNIQUES RECHERCHES (Int. Cl.5)

A01B

Le présent rapport a été établi pour toutes les revendications

| Lieu de la recherche | Date d'achèvement de la recherche | Examinateur |
|---|---|---|
| LA HAYE | 28 AOUT 1991 | WOHLRAPP R.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................
& : membre de la même famille, document correspondant

EPO FORM 1503 03.82 (P0402)